(19) Europäisches Patentamt
European Patent Office
Office européen des brevets

(11) **EP 1 971 071 A2**

(12) **EUROPÄISCHE PATENTANMELDUNG**

(43) Veröffentlichungstag:
**17.09.2008 Patentblatt 2008/38**

(51) Int Cl.:
***H04L 9/06*** *(2006.01)*

(21) Anmeldenummer: **08003316.0**

(22) Anmeldetag: **23.02.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **16.03.2007 DE 102007012726**

(71) Anmelder: **Micronas GmbH**
**79108 Freiburg i. Br. (DE)**

(72) Erfinder:
• **Kaluza, Sebastian**
**81541 München (DE)**
• **Steffens, Reinhard**
**Santa Clara**
**CA 95050 (US)**

(74) Vertreter: **Bickel, Michael**
**Westphal, Mussgnug & Partner**
**Patentanwälte**
**Herzog-Wilhelm-Strasse 26**
**80331 München (DE)**

(54) **Verschlüsselungsvorrichtung mit einem mehrstufigen Verschlüsselungsblock**

(57) Beschrieben ist eine Verschlüsselungsvorrichtung mit einer Verschlüsselungseinheit (100), die aufweist: einen Eingang zur Zuführung eines Eingangsdatenwortes (X), einen Ausgang zur Bereitstellung eines verschlüsselten Ausgangsdatenwortes (Y) und wenigstens einen Verschlüsselungsblock (10; $10_1$, $10_2$; $10_a$), der aufweist:

mehrere zwischen dem Eingang und dem Ausgang hintereinander geschaltete Verschlüsselungsstufen ($1_1$, $1_2$, $1_d$), die jeweils mehrere parallel geschaltete Logikblöcke (2) aufweisen,

wobei Logikblöcken einer ersten Verschlüsselungsstufe ($1_1$) Datenbits des Eingangsdatenwortes (X) oder von Datenbits des Eingangsdatenwortes (X) abhängige Datenbits zugeführt sind,
wobei Logikblöcken weiterer Verschlüsselungsstufen ($1_2$, $1_d$) Datenbits eines Ausgangsdatenwortes einer vorangehenden Verschlüsselungsstufe oder von Datenbits eines Ausgangsdatenwortes einer vorangehenden Verschlüsselungsstufe abhängige Datenbits zugeführt sind.

FIG 1

EP 1 971 071 A2

**Beschreibung**

Die Erfindung betrifft eine Verschlüsselungsvorrichtung.

Die Ver- und Entschlüsselung von digitalen Daten gewinnt beispielsweise bei der Übertragung von digitalen Audio- und Bilddaten über öffentliche Netze an Bedeutung. Um einen ausreichenden Kopierschutz zu gewährleisten werden darüber hinaus auch Audio- und Bilddaten verschlüsselt auf Datenträgern (CD, DVD, etc.) gespeichert. Die Verschlüsselung und vor allem die Entschlüsselung der Daten erfolgt normalerweise durch eine eigens dafür entwickelte Schaltung, die beispielsweise in einem ASIC implementiert sein kann. Durch technische Weiterentwicklung wird es jedoch zunehmend möglich eine solche Ver- und Entschlüsselung auch in einem handelsüblichen PC in Echtzeit zu realisieren, wodurch auch die Gefahr für einen Missbrauch steigt.

Ein grundlegendes Verschlüsselungsverfahren, das nichtlineare Verschlüsselungsoperationen umfasst und das durch eine geeignete Kombination dieser nicht-linearen Operationen mit linearen Operationen reversibel ist, ist beispielsweise in der US 3,798,359 (Feistel) beschrieben. Weitere Verschlüsselungsverfahren sind beispielsweise beschrieben in der WO 2006/033103, der US 2005/0111659 oder der EP 1 398 901 A1.

Aufgabe der vorliegenden Erfindung ist es, eine Verschlüsselungsvorrichtung zur Verfügung zu stellen, die für eine missbräuchliche Implementierung auf einem PC unattraktiv ist, die als anwendungsspezifische Schaltung (ASIC) jedoch platzsparend realisierbar ist und eine schnelle Verschlüsselung gewährleistet.

Diese Aufgabe wird durch eine Verschlüsselungsvorrichtung nach Anspruch 1 gelöst. Ausgestaltungen und Weiterbildungen sind Gegenstand der Unteransprüche.

Die erfindungsgemäße Verschlüsselungsvorrichtung umfasst eine Verschlüsselungseinheit mit einem Eingang zur Zuführung eines Eingangsdatenwortes, einem Ausgang zur Bereitstellung eines verschlüsselten Ausgangsdatenwortes und mit wenigstens einem Verschlüsselungsblock. Dieser wenigstens eine Verschlüsselungsblock umfasst mehrere zwischen dem Eingang und dem Ausgang hintereinander geschaltete Verschlüsselungsstufen, die jeweils mehrere parallel geschaltete Logikblöcke aufweisen, wobei Logikblöcken einer ersten Verschlüsselungsstufe Datenbits des Eingangsdatenwortes oder von diesen Datenbits des Eingangsdatenwortes abhängige Datenbits zugeführt sind und wobei Logikblöcken weiterer Verschlüsselungsstufen Datenbits eines Ausgangsdatenwortes einer vorangehenden Verschlüsselungsstufe oder von diesen Datenbits des Ausgangsdatenwortes abhängige Datenbits zugeführt sind.

Die Logikblöcke können hierbei insbesondere so ausgebildet sein, dass sie ihnen zugeführte Eingangsdatenbits mittels einer vollständig minimierten Boole'schen Operation auf Ausgangsdatenbits abbilden.

Die einzelnen Logikblöcke der Verschlüsselungseinheit wenden sogenannte Einzelbit-Operationen auf die ihnen jeweils zugeführten Eingangsdatenbits an. Solche Einzelbit-Operationen, sind für eine CPU eines handelsüblichen PC aufwendig, da solche CPUs üblicherweise für die Verarbeitung eines ganzen oder auch für die Verarbeitung mehrerer mehrere Bytes langer Datenworte entworfen sind. Der erforderliche Rechenaufwand für die Nachbildung eines mittels der Verschlüsselungsvorrichtung durchführbaren Verschlüsselungsverfahrens auf einem PC steigt durch die Anzahl der hintereinandergeschalteten Verschlüsselungsstufen mit jeweils mehreren Logikblöcken. Als anwendungsspezifische festverdrahtete Schaltung (ASIC) ist die Verschlüsselungsvorrichtung hingegen mit geringem Platzaufwand realisierbar und in der Lage, Einzelbit-Operationen, beispielsweise für eine Videowiedergabe, in Echtzeit durchzuführen.

Die einzelnen Verschlüsselungsstufen können hierbei jeweils gleich viele Logikblöcke oder auch unterschiedlich viele Logikblöcke aufweisen, wobei die einzelnen Logikblöcke insbesondere identisch realisiert sein können.

Bei einer Ausführungsform ist vorgesehen, dass die Verschlüsselungseinheit mehrere parallel geschaltete Verschlüsselungsblöcke aufweist, denen jeweils wenigstens ein Teil des Eingangsdatenwortes oder denen jeweils Datenbits zugeführt die wenigstens von einem Teil des Eingangsdatenwortes abhängig sind.

Ausführungsbeispiele der vorliegenden Erfindung werden nachfolgend anhand von Figuren näher erläutert.

Figur 1 zeigt schematisch ein Ausführungsbeispiel einer Verschlüsselungseinheit mit einem mehrere Verschlüsselungsstufen aufweisenden Verschlüsselungsblock.

Figur 2 zeigt ein Realisierungsbeispiel eines Logikblocks einer Verschlüsselungsstufe.

Figur 3 zeigt ein erstes Realisierungsbeispiel einer zwischen zwei Verschlüsselungsstufen angeordneten Verknüpfungseinheit.

Figur 4 zeigt ein zweites Ausführungsbeispiel einer zwischen zwei Verschlüsselungsstufen angeordneten Verknüpfungseinheit.

Figur 5 zeigt ein Ausführungsbeispiel einer Verschlüsselungseinheit mit mehreren Verschlüsselungsblöcken.

Figur 6 zeigt ein Ausführungsbeispiel einer Verschlüsselungsvorrichtung, bei der die Verschlüsselungseinheit in einem Zweig einer Feistel-Struktur angeordnet ist.

Figur 7    zeigt eine zu der Struktur gemäß Figur 6 inverse Struktur.

Figur 8    zeigt ein weiteres Ausführungsbeispiel einer Verschlüsselungsvorrichtung, bei welcher der Verschlüsselungseinheit eine Substitutions- und Permutationseinheit vorgeschaltet ist.

Figur 9    zeigt eine Abwandlung der in Figur 8 dargestellten Verschlüsselungsvorrichtung.

In den Figuren bezeichnen, sofern nicht anders angegeben, gleiche Bezugszeichen gleiche Signale und Schaltungsblöcke mit gleicher Bedeutung.

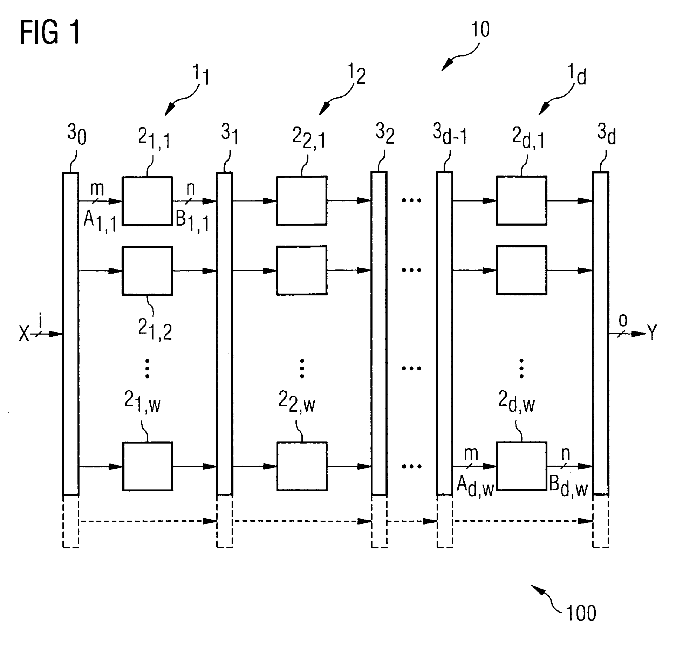

Figur 1 zeigt ein Ausführungsbeispiel einer Verschlüsselungseinheit 100 zur Verschlüsselung eines Eingangsdatenwortes X und zur Bereitstellung eines verschlüsselten Ausgangsdatenwortes Y. Diese Verschlüsselungseinheit
100 kann in noch zu erläuternder Weise mit weiteren Verschlüsselungseinheiten kombiniert werden, kann jedoch auch
bereits für sich allein als Verschlüsselungsvorrichtung genutzt werden.

Die dargestellte Verschlüsselungseinheit 100 weist einen Verschlüsselungsblock 10 mit mehreren hintereinander geschalteten Verschlüsselungsstufen $1_1$, $1_2$, $1_d$ auf. Die einzelnen Verschlüsselungsstufen $1_1$, $1_2$, $1_d$ weisen
jeweils mehrere parallel geschaltete Logikblöcke $2_{1,1}...2_{1,w}$, $2_{2,1}...2_{2,w}$, $2_{d,1}...2_{d,w}$ auf. Die Anzahl der Logikblöcke pro
Verschlüsselungsstufe kann hierbei für alle Verschlüsselungsstufen $1_1$, $1_2$, $1_d$ gleich sein, die einzelnen Verschlüsselungsstufen $1_1$, $1_2$, $1_d$ können sich allerdings auch bezüglich der Anzahl der Logikblöcke unterscheiden. Mit dem Bezugszeichen 1 wird nachfolgend eine beliebige dieser Verschlüsselungsstufen und mit dem Bezugszeichen 2 wird
nachfolgend ein beliebiger dieser Logikblöcke bezeichnet, wenn zu Zwecken der Erläuterung keine Bezugnahme auf
eine spezielle Verschlüsselungsstufe bzw. einen speziellen Logikblock erforderlich ist. Für die nachfolgende Erläuterung
sei angenommen, dass den einzelnen Logikblöcken 2 jeweils m Eingangsdatenbits zugeführt sind und dass die Logikblöcke 2 aus diesen m Eingangsdatenbits jeweils n Ausgangsdatenbits durch Anwenden logischer Operationen auf die
Eingangsdatenbits erzeugen. Die durch die Logikblöcke 2 auf die Eingangsdatenbits angewendeten logischen Operationen sind hierbei beispielsweise vollständig minimierte Boole'sche Operationen, d.h. diese Operationen lassen sich
mit Mitteln der Boole'schen Algebra nicht weiter vereinfachen bzw. minimieren.

Die einzelnen Logikblöcke 2 können identisch realisiert sein, können sich jedoch auch gegenseitig unterscheiden und können sich insbesondere auch durch die Anzahl ihrer Eingänge und die Anzahl ihrer Ausgänge unterscheiden.

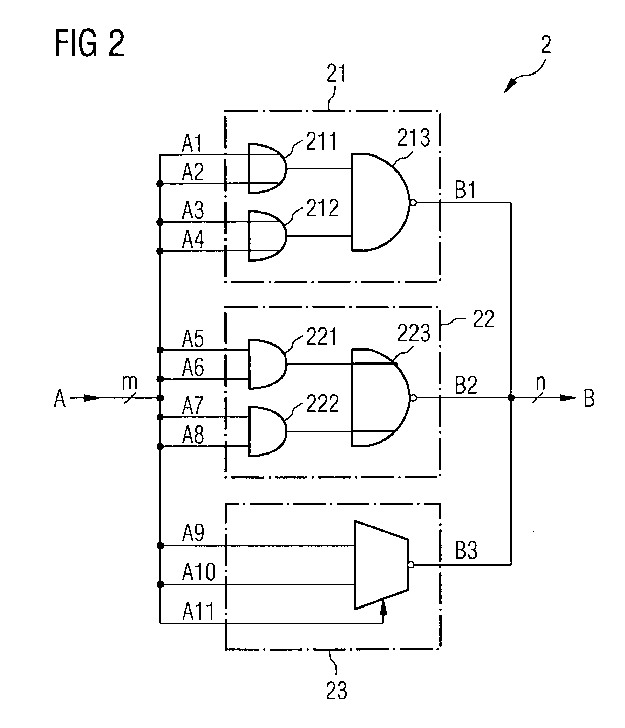

Ein Ausführungsbeispiel eines Logikblocks 2 ist in Figur 2 dargestellt. Dieser Logikblock weist m = 11 Eingänge
zur Zuführung eines Datenwortes A mit m Datenbits und n = 3 Ausgänge zur Bereitstellung eines Datenwortes B mit n
Datenbits auf. Der dargestellte Logikblock 2 umfasst drei Unterblöcke 21, 22, 23, von denen ein erster und ein zweiter
Unterblock 21, 22 jeweils vier Eingänge und ein dritter Unterblock 23 drei Eingänge aufweist. Die Datenbits A1-A11 des
Eingangswortes A sind den Unterblöcken hierbei eindeutig zugeordnet, d. h. jedes der Datenbits ist genau einem der
Eingänge des Logikblocks 2 zugeführt. Der erste Unterblock 21 des dargestellten Logikblocks umfasst ein NAND-Gatter
213 mit zwei Eingängen, dem zwei ODER-Gatter 211, 212 vorgeschaltet sind. Am Ausgang dieses ersten Unterblocks
21 steht ein erstes Ausgangsbit B1 zur Verfügung. Für dieses Ausgangsbit gilt hierbei:

$$B1 = (A1 \ OR \ A2) \ NAND \ (A3 \ OR \ A4) \tag{1}.$$

NAND bezeichnet hierbei eine NAND-Verknüpfung, während OR eine ODER-Verknüpfung bezeichnet.
Für ein am Ausgang des zweiten Unterblocks 22 zur Verfügung stehendes Datenbit B2 gilt in Abhängigkeit
von vier am Eingang dieses Unterblocks 22 anliegenden Datenbits A5-A8:

$$B2 = (A5 \ AND \ A6) \ NOR \ (A7 \ AND \ A8) \tag{2}.$$

NOR bezeichnet hierbei eine NOR-Verknüpfung, während AND eine UND-Verknüpfung bezeichnet. Zur Realisierung dieser Logikoperation umfasst der zweite Unterblock 22 ein NOR-Gatter 223 mit zwei Eingängen, dem zwei
AND-Gatter 221, 222 vorgeschaltet sind.
Der dritte Unterblock 23 umfasst in dem dargestellten Beispiel einen invertierenden Multiplexer dem ein erstes
und ein zweites Datenbit A9, A10 als Eingangsbits und ein drittes Datenbit A11 als Auswahlbit zugeführt sind. Ein
Ausgangsbit B3 dieses Multiplexers 23 entspricht abhängig von dem dritten Datenbit A11 dem invertierten ersten Eingangsbit A9 oder dem invertierten zweiten Eingangsbit A10. Für die durch diesen Multiplexer 23 durchgeführte Einzelbit- bzw. Logikoperation gilt also:

$$B3 = MUX(INV(A9), INV(A10):A11) \qquad (3).$$

INV(.) bezeichnet hierbei eine Invertierungsoperation, MUX(x, y:z) bezeichnet allgemein eine Multiplexoperation, bei der nach Maßgabe des Datenbits z eines der beiden Datenbits x, y ausgewählt wird.

Die durch die Unterblöcke 21, 22, 23 des Logikblocks 2 durchgeführten Logikoperationen sind jeweils vollständig minimierte Boole'sche Operationen. Gemeinsam ist diesen Operationen jeweils, dass sie ein günstiges Verhältnis zwischen benötigter Hardwarefläche und einer Anzahl zur Nachbildung in Software erforderlicher CPU-Verarbeitungszyklen besitzen. Gemeinsam ist diesen Unterblöcken also, dass sie in Hardware mit geringem Platzaufwand realisierbar sind, während bezogen auf den benötigten Platzaufwand viele Verarbeitungszyklen bei einer Softwarerealisierung erforderlich sind. Ein Verschlüsselungsblock 10 mit Logikblöcken 2 der in Figur 2 dargestellten Art, lässt sich als anwendungsspezifische Schaltung (ASIC) einfach und platzsparend realisieren und erlaubt eine schnelle Verschlüsselung des Eingangsdatenwortes X für die Bereitstellung des Ausgangsdatenwortes Y. Ein solcher Verschlüsselungsblock 10 lässt sich unter Verwendung einer herkömmlichen CPU und einem Softwareprogramm jedoch nur aufwendig und damit vergleichsweise langsam nachbilden, was ein Ausspähen des durch die Vorrichtung angewendeten Verschlüsselungsalgorithmus erschwert.

Es sei darauf hingewiesen, dass der in Figur 2 dargestellte Logikblock 2 lediglich als Beispiel für die im Zusammenhang mit der Erfindung anwendbaren Logikblöcke anzusehen ist. NAND-Gatter und NOR-Gatter besitzen ebenfalls ein günstiges Verhältnis zwischen benötigter Hardwarefläche und Anzahl der zur Nachbildung erforderlichen CPU-Zyklen. In nicht näher dargestellter Weise besteht daher die Möglichkeit, pro Logikblock einen oder mehrere Unterblöcke vorzusehen, die nur jeweils ein NAND-Gatter oder ein NOR-Gatter aufweisen. Des Weiteren besteht die Möglichkeit, die Logikblöcke 2 mit nur einem der in Figur 2 dargestellten Unterblöcke 21, 22, 23 zu realisieren. Die einzelnen Logikblöcke 2 können hierbei jeweils identisch aufgebaut sein. Weiterhin besteht auch die Möglichkeit, die einzelnen Logikblöcke unterschiedlich zu realisieren. So können beispielsweise insgesamt drei unterschiedliche Logikblöcke innerhalb des Verschlüsselungsblocks 10 vorgesehen werden, wobei erste dieser Logikblöcke beispielsweise den in Figur 2 dargestellten ersten Unterblock, zweite Logikblöcke beispielsweise den in Figur 2 dargestellten zweiten Unterblock und dritte Logikblöcke beispielsweise den in Figur 2 dargestellten dritten Unterblock enthalten.

Bezug nehmend auf Figur 1 ist der ersten Verschlüsselungsstufe $1_1$ eine Abbildungsschaltung $3_0$ vorgeschaltet, der das Eingangsdatenwort X zugeführt ist und die Datenbits des Eingangsdatenwortes X den Eingängen der Logikblöcke der ersten Verschlüsselungsstufe $1_1$ zuführt. Diese Abbildungseinheit $3_0$ weist eine der Wortbreite i des Eingangsdatenwortes X entsprechende Anzahl Eingänge und eine der Anzahl der Eingänge der ersten Verschlüsselungsstufe $1_1$ entsprechende Anzahl Ausgänge auf. Die Anzahl der Eingänge der ersten Verschlüsselungsstufe $1_1$ entspricht hierbei der Summe aller Eingänge der Logikblöcke $2_{1,1}...2_{1,w}$ der ersten Verschlüsselungsstufe $1_1$. Die Datenbreite i des Eingangswortes X ist hierbei kleiner als die Anzahl der Eingänge der ersten Verschlüsselungsstufe $1_1$, so dass einzelne Datenbits des Eingangsdatenwortes X mehreren Eingängen der ersten Verschlüsselungsstufe $1_1$ zugeführt sind.

Entsprechend sind zwischen den einzelnen Verschlüsselungsstufen $1_1$, $1_2$, ..., $1_d$ weitere Abbildungseinheiten $3_1$, $3_2$, ..., $3_{d-1}$ angeordnet, über die Ausgänge einer Verschlüsselungsstufe an Eingänge der jeweils nachfolgenden Verschlüsselungsstufe angeschlossen sind, bzw. die Ausgangsbits einer Verschlüsselungsstufe auf Eingangsbits einer nachfolgenden Verschlüsselungsstufe abbilden. Die Anzahl der Eingänge einer Abbildungseinheit entspricht hierbei der Summe der Ausgänge der jeweils vorgeschalteten Verschlüsselungsstufe, und die Anzahl der Ausgänge einer Abbildungseinheit entspricht der Summe aller Eingänge einer jeweils nachgeschalteten Verschlüsselungseinheit. Bei Verwendung identischer Logikblöcke mit jeweils n Ausgängen und bei Verwendung von w parallel geschalteten Logikblöcken pro Verschlüsselungseinheit stehen am Ausgang jeder Verschlüsselungseinheit w·n Ausgangsbits zur Verfügung, die auf w·m Eingänge der nachfolgenden Verschlüsselungsstufe abgebildet werden. Die Anzahl der Logikblöcke pro Verschlüsselungsstufe beträgt beispielsweise w = 200, oder mehr, so dass bei Verwendung von Logikblöcken 2 gemäß Figur 2 durch jede Abbildungseinheit 600 (= 3·200) Ausgangsbits einer Verschlüsselungsstufe auf 2200 (= 11200) Eingangsbits einer nachfolgende Verschlüsselungsstufe abgebildet werden.

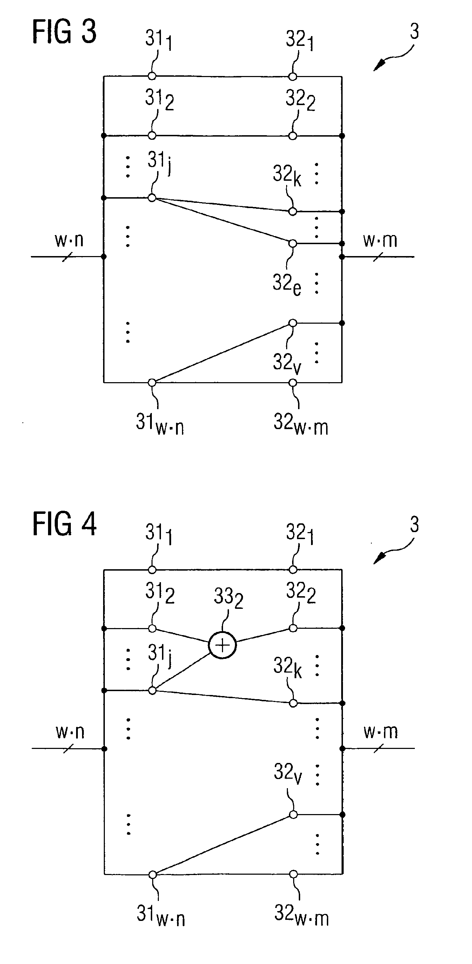

Figur 3 zeigt schematisch ein Ausführungsbeispiel einer solchen Abbildungseinheit 3. Die dargestellte Abbildungseinheit ist als reine Verdrahtungsstruktur realisiert und weist Eingänge $31_1...31_{w·n}$ zur Zuführung von Ausgangsbits der vorgeschalteten Verschlüsselungsstufe und Ausgänge $32_1...32_{w·m}$ zur Bereitstellung von Eingangsbits für die nachfolgende Verschlüsselungsstufe auf. Die Ein- und Ausgänge sind hierbei durch Leitungsverbindungen miteinander verbunden, wobei ein Eingang an mehrere Ausgänge angeschlossen sein kann, um eine Expansion zu erreichen, um also mehr Ausgangsbits zu Erzeugen, als Eingangsbits zugeführt werden. Mit $31_j$ ist in Figur 3 ein solcher Eingang bezeichnet, der an mehr als einen Ausgang $32_k$, $32_1$ der Abbildungseinheit 3 angeschlossen ist. Die Abbildungseinheit 3 ist vorteilhafterweise so realisiert, dass jeder Eingang an wenigstens einen der Ausgänge angeschlossen ist.

Figur 4 zeigt ein Ausführungsbeispiel einer Abbildungseinheit 3, die Logikgatter $33_2$ zwischen den Eingängen und den Ausgängen aufweist, die in Figur 4 beispielhaft durch ein XOR-Gatter repräsentiert sind. Bei dieser Abbildungseinheit 3 werden jeweils zwei oder mehr Eingangsbits durch ein LogikGatter verknüpft und dadurch auf ein Ausgangsbit der Abbildungseinheit 3 abgebildet. Zusätzlich zu den Logikgattern können bei dieser Abbildungseinheit 3 zwischen einzelnen Eingängen und Ausgängen auch reine Verdrahtungen vorgesehen sein. Bei Anwenden einer solchen Abbildungseinheit gibt es Eingangsdatenbits einer Verschlüsselungsstufe, die nicht identisch zu Ausgangsdatenbits einer vorherigen Verschlüsselungsstufe sind, sondern die über Logikoperationen von diesen Ausgangsdatenbits abhängig sind.

Bei dem in Figur 1 dargestellten Verschlüsselungsblock 10 ist eine weitere Abbildungseinheit $3_d$ vorgesehen, die der letzten Verschlüsselungsstufe $1_d$ nachgeschaltet ist und die aus Ausgangsbits dieser letzten Verschlüsselungsstufe $1_d$ das verschlüsselte Ausgangsdatenwort Y mit einer Wortbreite o bereitstellt. Die Wortbreite o des Ausgangsdatenwortes Y kann hierbei kleiner sein als die Anzahl der Ausgangsbits der letzten Verschlüsselungsstufe $1_d$. Die Abbildungseinheit $3_d$ ist in diesem Fall dann entweder so realisiert, dass nicht alle Ausgangsbits der letzten Verschlüsselungsstufe $1_d$ auf das Ausgangsdatenwort Y abgebildet werden, oder dass entsprechend dem Ausführungsbeispiel in Figur 4 jeweils mehrere Ausgangsbits der letzten Verschlüsselungsstufe $1_d$ durch eine Logikoperation miteinander verknüpft werden, um dadurch jeweils ein Datenbit für das Ausgangsdatenwort Y bereitzustellen.

Wie in Figur 1 gestrichelt dargestellt ist, kann bei dem Verschlüsselungsblock 10 außerdem vorgesehen sein, einzelne Datenbits, die am Ausgang einer der Abbildungseinheiten $3_0...3_d$ zur Verfügung stehen, unter Umgehung der Logikblöcke einer Verschlüsselungsstufe direkt an die nachfolgende Verschlüsselungsstufe bzw. die der nachfolgenden Verschlüsselungsstufe vorgeschaltete Abbildungseinheit weiterzuleiten. In nicht näher dargestellter Weise besteht auch die Möglichkeit, einzelne Datenbits nicht nur eine Verschlüsselungsstufe (wie in Figur 1) sondern auch zwei oder mehr Verschlüsselungsstufen "überspringen" zu lassen bzw. mehr als eine Verschlüsselungsstufe zu umgehen.

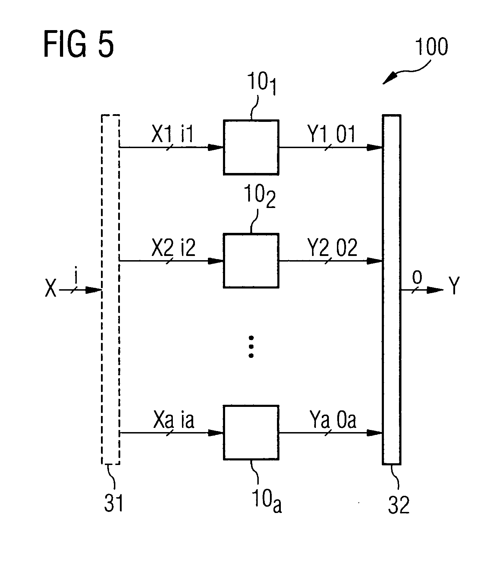

Figur 5 zeigt ein weiteres Ausführungsbeispiel einer Verschlüsselungseinheit 100 zur Erzeugung eines verschlüsselten Ausgangsdatenwortes Y einer Wortbreite o aus einem Eingangsdatenwort der Wortbreite i. Diese Verschlüsselungseinheit 100 weist mehrere, in dem Beispiel drei, parallel geschaltete Verschlüsselungsblöcke $10_1$, $10_2$, $10_a$ auf. Es sei darauf hingewiesen, dass die Erfindung selbstverständlich nicht auf die Verwendung von drei parallelen Verschlüsselungsblöcken beschränkt ist, sondern dass - wie durch die Punkte in Figur 5 angedeutet - eine beliebige Anzahl Verschlüsselungsblöcke parallel geschaltet werden können.

Entsprechend der Ausführungen zu Figur 1 umfassen die Verschlüsselungsblöcke $10_1$, $10_2$, $10_a$ jeweils mehrere hintereinander geschaltete Verschlüsselungsstufen, wobei jede Verschlüsselungsstufe mehrere parallel geschaltete Logikblöcke aufweist. Den einzelnen Verschlüsselungsblöcken $10_1$, $10_2$, $10_a$ sind jeweils Eingangsdatenworte X1, X2, Xa mit einer Wortbreite i1, i2, ia zugeführt, wobei jedes dieser Eingangsdatenworte X1, X2, Xa wenigstens einen Teil des der Verschlüsselungseinheit 100 zugeführten Eingangsdatenwortes X darstellt. Bei einem Ausführungsbeispiel sind diese Eingangsdatenworte X1, X2, Xa der Verschlüsselungsblöcke $10_1$, $10_2$, $10_a$ lediglich Teil-Datenworte des Eingangswortes X. Diese Teil-Datenworte werden in diesem Fall durch eine Abbildungseinheit 31 aus dem Eingangsdatenwort X erzeugt. Diese Abbildungseinheit kann beispielsweise entsprechend der in den Figuren 3 oder 4 dargestellten Abbildungseinheiten realisiert sein. Bei einem weiteren Ausführungsbeispiel ist vorgesehen, dass den einzelnen Verschlüsselungsblöcken $10_1$, $10_2$, $10_a$ jeweils das vollständige Eingangsdatenwort X zugeführt wird, in diesem Fall gilt: X1 = X2 = Xa = X und i1 = i2 = ia = i. Auf die den Verschlüsselungsblöcken $10_1$... $10_a$ vorgeschaltete Abbildungseinheit kann dann verzichtet werden. Darüber hinaus besteht auch die Möglichkeit, einem oder mehreren Verschlüsselungsblöcken das vollständige Eingangsdatenwort X und einer oder mehreren weiteren Verschlüsselungsblöcken nur einen Teil des Eingangsdatenwortes zuzuführen.

An den Ausgängen der Verschlüsselungsblöcke $10_1$, $10_2$,..., $10_a$ stehen jeweils Ausgangsdatenworte Y1, Y2, Ya mit einer Wortlänge o1, o2, oa zur Verfügung, die mittels einer weiteren Abbildungseinheit 32 auf das Ausgangsdatenwort Y der Wortbreite o abgebildet werden. Bei einem Ausführungsbeispiel ist vorgesehen, dass die Wortbreite der Ausgangsdatenworte Y1, Y2, Ya der Verschlüsselungsblöcke $10_1$, $10_2$, $10_a$ der Wortbreite o des Ausgangsdatenwortes Y entspricht und dass die Abbildungseinheit 32 eine bitweise XOR-Verknüpfung der Ausgangsdatenworte Y1, Y2, Ya durchführt, um das Ausgangsdatenwort Y zu erzeugen. In diesem Zusammenhang sei darauf hingewiesen, dass selbstverständlich beliebige weitere Abbildungs- bzw. Verknüpfungsoperationen durchgeführt werden können, um die Ausgangsdatenworte Y1, Y2, Ya der Verschlüsselungsblöcke auf das am Ausgang der Verschlüsselungseinheit zur Verfügung stehende Ausgangsdatenwort Y abzubilden. Die Anzahl der in der Verschlüsselungseinheit 100 parallel geschalteten Verschlüsselungsblöcke beträgt beispielsweise a=2, a = 3 oder mehr.

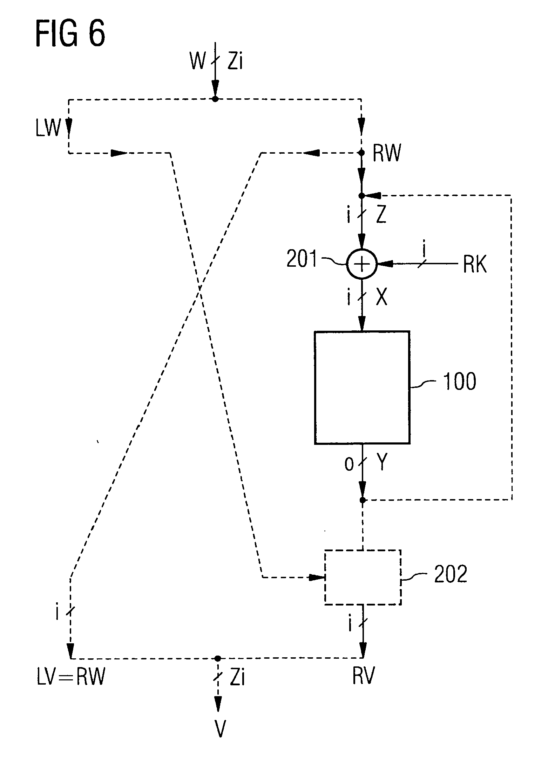

Wie bereits erwähnt genügt die Verschlüsselungseinheit 100 mit dem wenigstens einen mehrstufigen Verschlüsselungsblock, um eine Verschlüsselung eines Datenwortes zu erreichen. Die Verschlüsselungseinheit 100 kann jedoch auch mit weiteren Verschlüsselungseinheiten kombiniert werden. Ein Ausführungsbeispiel einer Verschlüsselungsvorrichtung mit einer solchen Verschlüsselungseinheit 100 und einer weiteren Verschlüsselungseinheit 201 ist in Figur 6 dargestellt. Die dargestellte Verschlüsselungsvorrichtung kombiniert eine Verschlüsselung eines Datenwortes Z unter Verwendung eines Schlüssels RK mit einer wenigstens einen mehrstufigen Verschlüsselungsblock aufweisenden Verschlüsselungseinheit 100. Ein der Verschlüsselungseinheit 100 zugeführtes Eingangsdatenwort X steht bei dieser Verschlüsselungsvorrichtung am Ausgang eines XOR-Gatters 201 zur Verfügung, das bitweise Datenbits eines Datenwortes Z mit Schlüsselbits eines Schlüssels RK verknüpft. Die Wortlänge des Datenwortes Z entspricht hierbei der Schlüssellänge des Schlüssels RK und der Wortlänge i des Eingangsdatenwortes X der Verschlüsselungseinheit 100. Sofern die Wortlänge des Datenwortes Z nicht der Schlüssellänge entspricht, kann dem XOR-Gatter eine Expansionseinheit (nicht dargestellt) vorgeschaltet werden, die aus dem Datenwort Z ein Datenwort mit einer der Schlüssellänge entsprechenden Wortbreite erzeugt.

Die dargestellte Verschlüsselungsvorrichtung bildet das Datenwort Z unter Anwendung des Schlüssels RK und der Verschlüsselungseinheit 100 auf das Ausgangsdatenwort Y der Wortlänge o ab. Diese Verschlüsselung kann mehrmals aufeinanderfolgend durchgeführt werden, was in Figur 6 durch einen strichpunktierte Rückkopplungsschleife vom Ausgang der Abbildungseinheit 100 auf den Eingang des XOR-Gatters 201 dargestellt ist. Der Schlüssel RK, der durch einen nicht näher dargestellten Schlüsselgenerator erzeugt wird, kann hierbei mit jedem Durchlauf der Verschlüsselungsvorrichtung bzw. mit jeder Runde wechseln. Verschlüsselungsvorrichtungen bzw. Verschlüsselungsalgorithmen, bei denen eine Verschlüsselungsstufe mehrfach durchlaufen wird, sind hinlänglich bekannt, so dass auf weitere Ausführungen zu zusätzlich benötigten Schaltungskomponenten, die ein solches mehrfaches Durchlaufen ermöglichen, hier verzichtet werden kann. Ein Verschlüsselungsalgorithmus, bei dem eine Verschlüsselungsstufe mehrfach aufeinanderfolgend unter Anwendung eines sich ändernden Schlüssels durchlaufen wird, ist beispielsweise der DES-Algorithmus.

Die durch das XOR-Gatter 201 durchgeführte Operation zur Verknüpfung des Datenwortes Z (oder eines aus dem Datenwort Z erzeugten expandierten Datenwortes) mit dem Schlüssel RK ist eine lineare Operation. Anstelle einer solchen linearen Operation kann allerdings auch eine beliebige nicht lineare Verknüpfungsoperation verwendet werden (nicht dargestellt).

Die Verschlüsselung des Datenwortes Z mittels des Schlüssels RK kann eine lineare oder eine nicht lineare Operation sein. Die Verschlüsselung des Datenwortes X durch die Verschlüsselungseinheit 100 ist in den dargestellten Beispielen stets eine nicht lineare Operation und als solche nicht reversibel, könnte allerdings auch als lineare (für eine Softwarerealisierung zeitaufwändige) Struktur realisiert sein. Durch Einbindung der Verschlüsselungsvorrichtung in eine Feistel-Struktur, die in Figur 6 gestrichelt dargestellt ist, kann jedoch eine Reversibilität, d. h. ein Entschlüsseln eines zuvor verschlüsselten Datenwortes, erreicht werden. Dieser Feistel-Struktur ist ein Datenwort W der Länge 2i zugeführt, das in zwei Teil-Datenworte LW, RW jeweils der Wortbreite i aufgeteilt wird und von denen ein erstes Teil-Datenwort RW der Verschlüsselungsanordnung mit dem XOR-Gatter 201 und der Verschlüsselungseinheit 100 zugeführt ist. Ein am Ausgang dieser Verschlüsselungsanordnung zur Verfügung stehendes Datenwort Y ist einem linearen Operator 202 zugeführt, der das zweite Teil-Datenwort LW linear mit diesem Ausgangsdatenwort Y verknüpft. Ein Ausgangsdatenwort dieser Feistel-Struktur setzt sich aus zwei Teil-Datenworten LV, RV zusammen, von denen ein erstes Teil-Datenwort LV dem ersten Teil-Datenwort RW des Eingangswortes W entspricht und von denen ein zweite Teil-Datenwort RV dem am Ausgang des linearen Operators zur Verfügung stehenden Datenwort RV entspricht. Die Verschlüsselungseinheit 100 kann hierbei so gewählt, dass die Wortbreite o des Ausgangsdatenwortes Y der Wortbreite i des Eingangsdatenwortes bzw. der Wortbreite i des zweiten Teil-Datenwortes LW entspricht. Dem linearen Operator kann allerdings auch ein Expandierer oder ein Komprimierer vorgeschaltet sein (nicht dargestellt), der eine Anpassung der Wortbreite o des Ausgangsdatenwortes Y an die Wortbreite des zweiten Teil-Datenwortes vornimmt.

Der lineare Operator 202 ist beispielsweise ein XOR-Operator, der das Ausgangsdatenwort Y der Verschlüsselungseinheit 100 bitweise mit dem zweiten Teil-Datenwort LW des Eingangswortes W verknüpft, kann jedoch auch eine beliebige anderer linearer Operator sein.

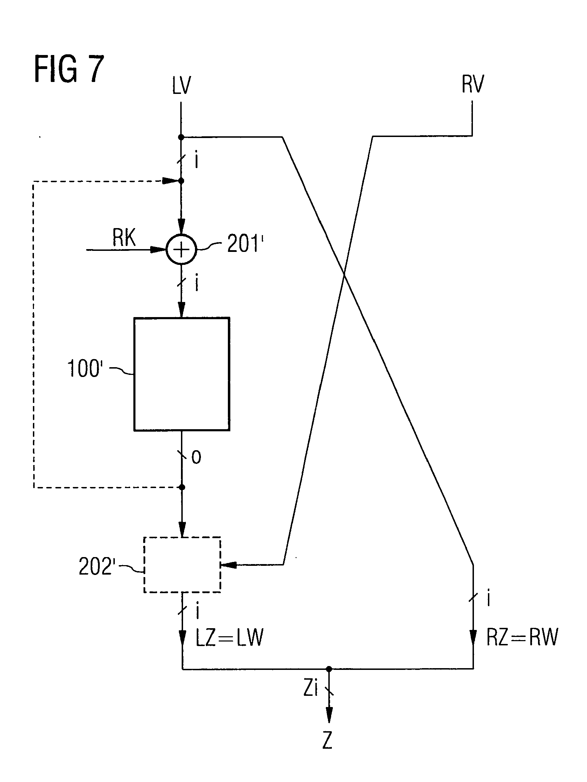

Das durch die dargestellte Feistel-Struktur erzeugte verschlüsselte Datenwort V mit einer Wortbreite 2i, das sich aus den Teil-Datenworten LV, RV zusammensetzt, lässt sich durch eine in Figur 7 dargestellte inverse Feistel-Struktur entschlüsseln. Diese inverse Feistel-Struktur enthält in einem Zweig, dem das erste Teil-Datenwort LV des verschlüsselten Datenwortes V zugeführt ist, eine Anordnung, die identisch ist zu der Verschlüsselungsanordnung in der zur Verschlüsselung eingesetzten Feistel-Struktur (Figur 6). Die zur Entschlüsselung verwendete Feistel-Struktur umfasst also einen dem linearen Operator 201 in Figur 6 entsprechenden linearen Operator 201' und eine der Verschlüsselungseinheit 100 in Figur 6 entsprechende Verschlüsselungseinheit 100'. Bei einem mehrfachen Durchlaufen der Verschlüsselungsanordnung sind die zum Verschlüsseln verwendeten Rundenschlüssel entsprechend, jedoch in umgekehrter Reihenfolge anzuwenden. Ein der Verschlüsselungseinheit 100' der Feistel-Struktur in Figur 7 nachgeschalteter linearer Operator 202' besitzt eine zu der Funktion des linearen Operators 202 in Figur 6 inverse Funktion. Ein am Ausgang dieses linearen Operators 202' zur Verfügung stehendes Teil-Datenwort LZ entspricht dem zweiten Teildatenwort LW des durch die Struktur gemäß Figur 6 verschlüsselten Datenwortes W. Ein zweites Teil-Datenwort RZ eines am Ausgang der Struktur gemäß Figur 7 zur Verfügung stehenden Datenwortes Z entspricht dem ersten Teil-Datenwort RW des durch die Struktur in Figur 6 verschlüsselten Datenwortes W.

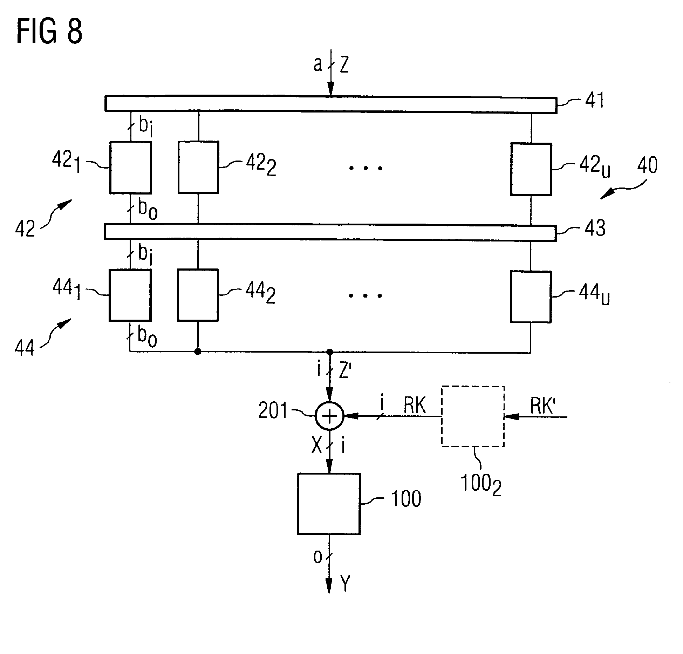

Figur 8 zeigt ein weiteres Ausführungsbeispiel einer Verschlüsselungsvorrichtung, die eine Verschlüsselungseinheit 100 mit wenigstens einem mehrstufigen Verschlüsselungsblock aufweist. Die durch die Verschlüsselungseinheit 100 bewirkte Verschlüsselung ist bei diesem Ausführungsbeispiel kombiniert mit einer Verschlüsselung unter Verwendung eines Schlüssels RK und einer durch eine Substitutions- und Permutationseinheit 40 durchgeführten Verschlüsselung. Ein zu verschlüsselndes Datenwort Z ist hierbei der Substitutions- und Permutationseinheit 40 zugeführt, die an einem Ausgang ein erstes verschlüsseltes Datenwort Z' einer Wortbreite i erzeugt. Dieses erste verschlüsselte Datenwort Z' wird unter Verwendung des Schlüssels RK weiterverschlüsselt, um das Eingangsdatenwort x der Wortbreite i der Verschlüsselungseinheit 100 bereitzustellen. Die Substitutions- und Permutationseinheit, die Schlüssel-Verschlüsselungseinheit 201 und die mehrstufige Verschlüsselungseinheit 100 sind bei dieser Ausführungsform aufeinanderfolgend angeordnet. In diesem Zusammenhang sei darauf hingewiesen, dass die Reihenfolge dieser einzelnen Verschlüsselungsstufen 40, 201, 100 selbstverständlich auch vertauscht werden kann. Des weiteren kann die Einheit auch so realisiert sein, dass sie das Eingangsdatenwort Z expandiert (die Wortbreite von Z' ist dann größer als die von Z). Darüber hinaus kann anstelle oder zusätzlich zu einer Permutations- und Substitutionseinheit auch eine beliebige andere Logikeinheit zur Erzeugung des Datenwortes Z' aus dem Eingangsdatenwort Z vorgesehen werden.

Die in Figur 8 dargestellte Substitutions- und Permutationseinheit weist beispielhaft zwei Substitutionsstufen 42, 44 und eine zwischen den beiden Substitutionsstufen angeordnete Permutationsstufe 43 auf. Die beiden Substitutionsstufen 42, 44 umfassen jeweils eine Anzahl parallel geschalteter Substitutionsblöcke $42_1...42_u$ bzw. $44_1...44_u$. Die einzelnen Substitutionsblöcke, die auch als S-Boxen bezeichnet werden, erhalten jeweils ein Eingangswort der Breite $b_i$ und ersetzen dieses Eingangswort der Breite $b_i$ durch ein Ausgangswort einer Breite $b_o$, wobei $b_i=b_o$ oder auch $b_i \neq b_o$ sein kann. Es gilt beispielweise $b_i=6$ und $b_o=4$. Die S-Boxen ordnen jedem Eingangsdatenwort ein Ausgangsdatenwort zu. Grundlage für diese Zuordnung ist beispielsweise eine Nachschlagetabelle, die in ein Logikstruktur umgesetzt ist.

Am Ausgang der ersten Substitutionseinheit 42 steht ein Datenwort zur Verfügung, dessen Datenlänge dem Produkt aus der Anzahl der S-Boxen $42_1...42_u$ und der Anzahl b der Ausgänge der einzelnen S-Boxen $42_1...42_u$ entspricht. Dieses Datenwort ist der Permutationseinheit 43 zugeführt, die ein Datenwort entsprechender Länge durch Vertauschen einzelner Datenbits des ihr zugeführten Datenwortes erzeugt. Das durch die Permutationseinheit 43 erzeugte Datenwort ist der weiteren Substitutionseinheit 44 zugeführt, die eine der Anzahl der S-Boxen der ersten Substitutionseinheit 42 entsprechende Anzahl parallel geschalteter S-Boxen mit jeweils b Eingängen und b Ausgängen aufweist. Am Ausgang der zweiten Substitutionseinheit 44 steht das erste verschlüsselte Datenwort Z' der Wortbreite i zur Verfügung. Die Wortbreite i entspricht hierbei dem Produkt aus der Anzahl der S-Boxen $44_1...44_u$ der zweiten Substitutionseinheit 44 und der Anzahl b der Ausgänge der einzelnen S-Boxen.

Sofern eine Wortbreite a des Eingangsdatenwortes Z geringer ist als eine Wortbreite i der Datenworte, die durch die Substitutionseinheiten 42, 44 und die Permutationseinheit 43 verarbeitet wird, ist optional eine Expansionseinheit 41 vorgesehen, die beispielsweise ein Datenbit des Eingangswortes Z auf mehrere Eingänge der ersten Substitutionseinheit 42 abbildet.

Die durch die in Figur 8 dargestellte Verschlüsselungsanordnung durchgeführte Verschlüsselungsoperation ist nicht reversibel. Bezugnehmend auf die Ausführungen zu den Figuren 6 und 7 kann diese Verschlüsselungsanordnung jedoch Teil einer Feistel-Struktur sein, wodurch in erläuterter Weise eine Reversibilität erreicht werden kann. Außer einer Feistel-Struktur können auch andere eine Reversibilität ermöglichende "Rahmenstrukturen" vorgesehen sein.

Zwischen den Operator zur Verknüpfung des Schlüssels RK mit dem expandierten Datenwort Z' kann optional ein weiterer Expandierer (nicht dargestellt) vorgesehen sein, der das am Ausgang des Operators 201 zur Verfügung stehende Datenwort weiter expandiert, beispielsweise auf i'=128 Bit, wobei das auf diese Weise expandierte Datenwort durch die Verschlüsselungseinheit 100 weiter verschlüsselt wird. Wie bereits erläutert, kann zwischen der Verschlüsselungseinheit 100 und dem linearen Operator (202 in Figur 8) ein Komprimierer vorgesehen sein. So erzeugt die Verschlüsselungseinheit beispielsweise ein Datenwort ebenfalls der Länge 128 Bit, das durch einen solchen Komprimierer dann auf ein Datenwort der Breite i=64 Bit reduziert wird. Vor oder nach diesem Komprimierer kann eine weitere Substitutions- und/oder Permutationseinheit vorgesehen sein.

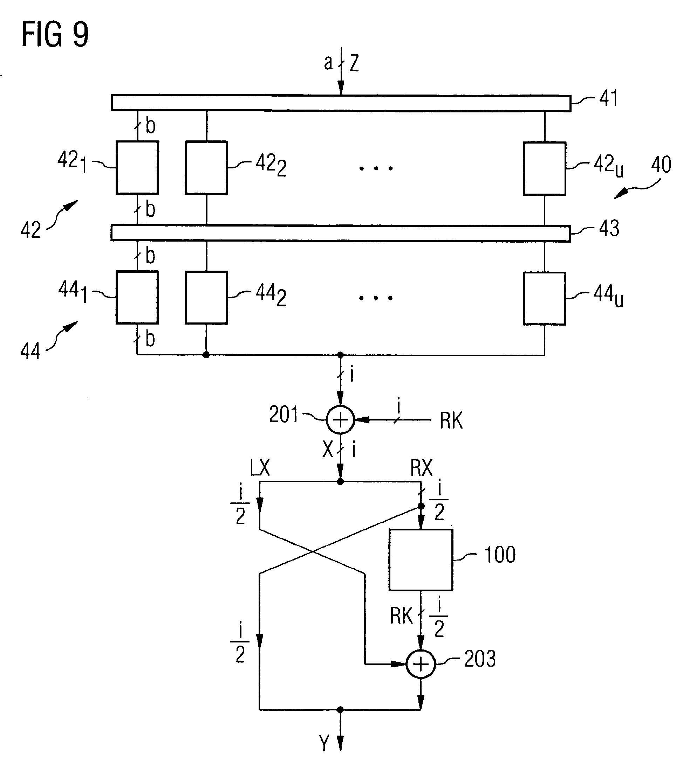

Figur 9 zeigt eine Abwandlung der in Figur 8 dargestellten Verschlüsselungsanordnung. Bei dieser Verschlüsselungsanordnung gemäß Figur 9 ist die Verschlüsselungseinheit 100 innerhalb der Verschlüsselungsanordnung Teil einer Feistel-Struktur. Dieser Verschlüsselungseinheit 100 ist hierbei nur ein erstes Teil-Datenwort RX des Eingangsdatenwortes X zugeführt. Ein Ausgangsdatenwort RY der Verschlüsselungseinheit wird hierbei durch einen linearen Operator 203, beispielsweise einem XOR-Operator, mit einem zweiten Teil-Datenwort LX des Eingangsdatenwortes verknüpft. Die beiden Teil-Datenworte LX, RX besitzen hierbei eine gleiche Wortlänge i/2. Ein Ausgangsdatenwort Y setzt sich bei dieser Anordnung zusammen aus dem ersten Teil-Datenwort RX und einem Ausgang des linearen Operators zur Verfügung stehenden Teil-Datenwort.

Die erläuterte Verschlüsselungseinheit 100 mit dem wenigstens einen mehrstufigen Verschlüsselungsblock eignet sich in erläuterter Weise für die Verschlüsselung von Datenbits. Ist die Einheit 100 wie in Figur 6 in eine Feistel Struktur eingebunden, der Eingangsdatenworte der Länge 128 Bit zugeführt sind, so ist die Verschlüsselungseinheit 100 beispielsweise so realisiert, dass sie Datenworte einer Länge 64 Bit verarbeitet.

Bei dem anhand von Figur 8 Beispiel kann die Substitutions- und Permutationseinheit 40 so realisiert sein, dass sie aus einem Datenwort Z der Länge a=64 ein erste verschlüsseltes Datenwort Z' der Länge i=100 erzeugt. Die Substitutionseinheiten 42, 44 weisen in diesem Fall beispielsweise jeweils 25 S-Boxen mit jeweils b=4 Ein- und Ausgängen auf. Der Schlüssel RK weist in diesem Fall ebenfalls 100 Schlüsselbits auf. Der Verschlüsselungseinheit ist in diesem Fall ein Eingangsdatenwort X der Wortbreite i=100 zugeführt, aus dem die Verschlüsselungseinheit ein Datenwort Y der Wortbreite o=64 zur weiteren Verarbeitung in einer Feistel-Struktur erzeugt.

Bei dem Beispiel gemäß Figur 9 besitzt das Eingangsdatenwort X der Feistel-Struktur mit der Verschlüsselungseinheit 100 eine Wortlänge mit i=64, wenn insgesamt (bei Vorsehen einer übergeordneten Feistel-Struktur) ein Datenwort mit einer Länge von 128 Bit verarbeitet werden soll.

Die erläuterte Verschlüsselungseinheit mit wenigstens einem mehrstufigen Verschlüsselungsblock eignet sich auch für die Verschlüsselung von Schlüsselbits, was gestrichelt in Figur 8 durch eine Verschlüsselungseinheit $100_2$ dargestellt ist. Diese Verschlüsselungseinheit $100_2$ erzeugt aus einem Schlüssel RK' der Länge 128 Bit beispielsweise einen Schlüssel der Länge 100 Bit für die weitere Verarbeitung. In nicht näher dargestellter Weise besteht insbesondere die Möglichkeit, dieselbe Verschlüsselungslogikschaltung im Zeitmultiplex für die Verschlüsselung von Datenbits und die Verschlüsselung von Schlüsselbits zu verwenden.

## Patentansprüche

1. Verschlüsselungsvorrichtung mit einer Verschlüsselungseinheit (100), die aufweist: einen Eingang zur Zuführung eines Eingangsdatenwortes (X), einen Ausgang zur Bereitstellung eines verschlüsselten Ausgangsdatenwortes (Y) und wenigstens einen Verschlüsselungsblock (10; $10_1$, $10_2$; $10_a$), der aufweist:

   mehrere zwischen dem Eingang und dem Ausgang hintereinander geschaltete Verschlüsselungsstufen ($1_1$, $1_2$, $1_d$), die jeweils mehrere parallel geschaltete Logikblöcke (2) aufweisen,

   wobei Logikblöcken einer ersten Verschlüsselungsstufe ($1_1$) Datenbits des Eingangsdatenwortes (X) oder von Datenbits des Eingangsdatenwortes (X) abhängige Datenbits zugeführt sind,
   wobei Logikblöcken weiterer Verschlüsselungsstufen ($1_2$, $1_d$) Datenbits eines Ausgangsdatenwortes einer vorangehenden Verschlüsselungsstufe oder von Datenbits eines Ausgangsdatenwortes einer vorangehenden Verschlüsselungsstufe abhängige Datenbits zugeführt sind.

2. Verschlüsselungsvorrichtung nach Anspruch 1, bei der die Logikblöcke dazu ausgebildet sind, ihnen zugeführte Eingangsdatenbits mittels einer vollständig minimierten Boole'schen Operation auf Ausgangsdatenbits abzubilden.

3. Verschlüsselungsvorrichtung nach Anspruch 1 oder 2, bei der die einzelnen Logikblöcke (2) identisch realisiert sind.

4. Verschlüsselungsvorrichtung nach Anspruch 1 oder 2, bei der der wenigstens eine Verschlüsselungsblock mehr als 5 Verschlüsselungsstufen aufweist.

5. Verschlüsselungsvorrichtung nach einem der Ansprüche 1 bis 4, bei der die einzelnen Verschlüsselungsstufen ($1_1$, $1_2$, $1_d$) jeweils mehr als 100 Logikblöcke aufweisen.

6. Verschlüsselungsvorrichtung nach einem der vorangehenden Ansprüche, bei der die einzelnen Verschlüsselungsstufen ($1_1$, $1_2$, $1_d$) jeweils gleich viele Logikblöcke aufweisen.

7. Verschlüsselungsvorrichtung nach einem der vorangehenden Ansprüche, die mehrere parallel geschaltete Verschlüsselungsblöcke ($10_1$, $10_2$, $10_a$) aufweist, denen jeweils wenigstens ein Teil (X1, X2, X3) eines Eingangsdatenwortes (X) zugeführt ist und die jeweils ein Ausgangsdatenwort (Y1, Y2, Y3) bereitstellen.

8. Verschlüsselungsvorrichtung nach Anspruch 7, die eine den Verschlüsselungsblöcken ($10_1$, $10_2$, $10_a$) nachgeschaltete Verknüpfungsschaltung (32) aufweist, der die Ausgangsdatenworte (Y1, Y2, Y3) der Verschlüsselungsblöcke ($10_1$, $10_2$, $10_a$) zugeführt sind und die ein Ausgangsdatenwort (Y) bereitstellt.

9. Verschlüsselungsvorrichtung nach einem der vorangehenden Ansprüche, bei der die Logikblöcke als festverdrahtete Schaltungsblöcke realisiert sind.

10. Verschlüsselungsvorrichtung nach einem der vorangehenden Ansprüche, bei der jeder der Logikblöcke (2) wenigstens eines der folgenden Logikgatter aufweist: einen invertierenden Multiplexer, ein NAND-Gatter oder ein NOR-Gatter.

11. Verschlüsselungsvorrichtung nach Anspruch 10, bei der jeder der Logikblöcke wenigstens eine der nachfolgenden logischen Operationen auf Eingangsdatenbits anwendet:

B1 = (A1 OR A2) NAND (A3 OR A4),
B2 = (A5 AND A6) NOR (A7 AND A8),
B3 = MUX(INV(A9), INV (A10 ) : A11),

wobei

A1...A11 Eingangsdatenbits,
B1...B3 Ausgangsdatenbits,
NOR eine logische NOR-Verknüpfung,
NAND eine logische NAND-Verknüpfung,
INV eine Invertierungsoperation, und
MUX(x,y:z) eine auf x und y abhängig von z angewendete Multiplexoperation

bezeichnen.

12. Verschlüsselungsvorrichtung nach einem der vorangehenden Ansprüche, bei der die Verschlüsselungseinheit (100) in einem Zweig einer Feistel-Struktur angeordnet ist.

13. Verschlüsselungsvorrichtung nach einem der vorangehenden Ansprüche, bei der der Verschlüsselungseinheit (100) eine Verknüpfungsschaltung (201) zur Verknüpfung eines Datenwortes mit einem Schlüssel (RK) vorgeschaltet ist.

14. Verschlüsselungsvorrichtung nach einem der vorangehenden Ansprüche, bei der der Verschlüsselungseinheit eine Substitutions- und Permutationseinheit (40) vorgeschaltet ist.

15. Verwendung einer Verschlüsselungsvorrichtung nach einem der vorangehenden Ansprüche zur Verschlüsselung eines Schlüssels.

## FIG 1

# FIG 2

## FIG 3

$31_1$   $32_1$   3

$31_2$   $32_2$

$31_j$   $32_k$

$32_e$

w·n   w·m

$32_v$

$31_{w·n}$   $32_{w·m}$

## FIG 4

$31_1$   $32_1$   3

$31_2$   $33_2$   $32_2$

$31_j$   $32_k$

w·n   w·m

$32_v$

$31_{w·n}$   $32_{w·m}$

## FIG 5

# FIG 6

**FIG 7**

FIG 8

FIG 9

**EP 1 971 071 A2**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 3798359 A, Feistel
- WO 2006033103 A
- US 20050111659 A
- EP 1398901 A1